# EUROPÄISCHE PATENTSCHRIFT

(11) **EP 4 212 306 B1**
(45) Veröffentlichungstag und Bekanntmachung des Hinweises auf die Patenterteilung: **25.12.2024**
(21) Anmeldenummer: 23150369.9
(22) Anmeldetag: 04.01.2023
(51) Int. Cl.: B29C 45/17, B29C 45/60, B29C 48/25, F16D 1/02

(54) **KUPPLUNGSVORRICHTUNG UND KUNSTSTOFFVERARBEITENDE MASCHINE MIT EINER KUPPLUNGSVORRICHTUNG**
COUPLING DEVICE AND PLASTIC PROCESSING MACHINE WITH A COUPLING DEVICE
DISPOSITIF D'ACCOUPLEMENT ET MACHINE DE TRAITEMENT DE MATIÈRE PLASTIQUE DOTÉE D'UN DISPOSITIF D'ACCOUPLEMENT

(30) Priorität: 12.01.2022 DE 102022100616
(43) Veröffentlichungstag der Anmeldung: 19.07.2023
(73) Patentinhaber: Arburg GmbH + Co KG, 72290 Loßburg (DE)
(72) Erfinder: NEFF, Martin, 78730 Lauterbach (DE); LING, Andreas, 72270 Baiersbronn (DE)
(74) Vertreter: RPK Patenanwälte Reinhardt und Kaufmann Partnerschaft mbB (Pforzheim)

(56) Entgegenhaltungen:
- DE-A1- 1 529 788
- DE-A1- 2 035 788
- DE-A1- 4 223 489
- DE-U1- 8 400 654
- JP-U- S60 157 214
- JP-Y1- S 503 572

## Beschreibung

Die vorliegende Erfindung betrifft eine Kupplungsvorrichtung für eine Förderschnecke und einen diese antreibenden Antrieb einer kunststoffverarbeitenden Maschine gemäß Anspruch 1 und eine kunststoffverarbeitende Maschine mit einer Kupplungsvorrichtung für eine Förderschnecke und einen diese antreibenden Antrieb gemäß Anspruch 12.

Herkömmliche Kupplungsvorrichtungen sind oft komplexe Gebilde, die zudem meist in schwer zugänglichen und kaum einsehbaren Bereichen angeordnet sind und eine bedienerfreundliche Handhabung erschweren.

Ein Beispiel für solch eine komplexe Lösung ist z. B. in der DE 37 35 701 C1 zu finden. Darin beschrieben ist eine Kunststoff-Spritzgießeinheit mit einer Verriegelungseinrichtung zum gleichzeitigen programmgesteuerten Verriegeln des Plastifizierzylinders und der Förderschnecke mit dem Trägerblock des Plastifizierzylinders bzw. mit der rotierbaren Antriebswelle für die Förderschnecke. Diese ist mit einem Mitnahmeprofil in ein korrespondierendes Mitnahmeprofil eines Mitnehmerstückes der Antriebswelle einsteckbar und mittels hydraulischer Einspritzzylinder zum Einspritzen des Kunststoffes axial verschiebbar. Weiterhin weist sie zwei am Block radial geführte und diametral angeordnete Schieber auf, die mittels wenigstens eines Hydraulikzylinders aus ihrer Verriegelungsposition verschiebbar sind. Außerdem weist sie einen am Mitnehmerstück radial geführten rotierbaren Schieber auf, der in einer die Verriegelung der Förderschnecke ermöglichenden Soll-Winkelstellung mittels desselben Hydraulikzylinders aus der Verriegelungsposition verschiebbar ist. Die Soll-Winkelstellung ist mit Hilfe einer den Rotationsmotor für die Förderschnecke auf Stillstand steuernden Orientierungseinrichtung herstellbar. Dabei ist an einem der diametralen Schieber eine Mitnehmerbrücke befestigt, die den rotierbaren Schieber bei Soll-Winkelstellung für eine gemeinsame Verriegelungsbewegung von diametralem und rotierbarem Schieber hintergreift.

Auch die in der EP 0 595 200 B1 dargestellte Lösung ist ein Beispiel dafür. Darin beschrieben ist eine Kupplungseinrichtung an einer Kunststoff-Spritzgießmaschine zum Kuppeln einer beim Spritzzyklus im abnehmbaren Plastifizierzylinder rotierbaren und axial verschiebbaren Förderschnecke mit einer zu einer Achse koaxialen Spindel einer maschinenseitigen Antriebseinrichtung. Die Kupplungsvorrichtung weist zumindest eine Axialverriegelungsvorrichtung auf, die der Rotationsbewegung unterworfenen ist. Die zur maschinenseitigen Kupplung gehörigen Verriegelungselemente sind in einer der Förderschnecke zugewandten Aufnahme aufgenommen, die über Gewindebolzen lösbar mit der Antriebseinrichtung verbunden ist. Dabei ist die Aufnahme über Gewindebolzen mit Bohrungen der Spindel verbunden, die gegenüber einer durch die Achse gelegten Ebene geneigt angeordnet sind.

Die Förderschnecke wird dabei z. B. über eine angezogene Sechskant-Überwurfmutter in der Antriebsbuchse befestigt, so dass sowohl Rotationsbewegungen sowie axiale Verschiebungen durch den Antrieb übertragen werden können. Die Antriebswelle ist üblicherweise durch einen Freilauf in Anzugsrichtung der Überwurfmutter blockiert, wodurch das Mitdrehen beim Anziehen verhindert wird. Für das Lösen der Überwurfmutter zum Ausbau der Schnecke muss die Antriebswelle gegen Verdrehen gesichert werden, da diese sich sonst infolge des Lösemoments mitdrehen würde. Dies erfordert oft eine ausreichend dimensionierte Zugangsöffnung für Hilfsmittel oder Werkzeuge, insbesondere Sonderwerkzeuge, bei gleichzeitiger Sicherstellung der optischen Einsicht, um die Handlungsvorgänge visuell begleiten zu können. Eine Kontrollmöglichkeit, ob die Förderschnecke korrekt in der Antriebsbuchse sitzt und vollständig darin aufgenommen wurde, ist oft nicht vorhanden. Beispielsweise durch Verschmutzung, Gratbildung, Defekte, Geometrieabweichungen, etc. besteht die Gefahr, dass die Schnecke nicht in Sollposition montiert wurde und dies vom Bediener unerkannt bleibt. In der Folge kann es während des Betriebs zu einer Fehlfunktion kommen, wie z.B. die Mutter löst sich selbstständig, es ist keine ausreichende Drehmomentübertragung gegeben oder die Förderschnecke weist ein erhöhtes Axialspiel auf. Auch ist ein Versagen von Bauteilen möglich.

Die DE 38 08 769 A1 beschreibt eine Vorrichtung zum Wechseln der Plastifiziereinheit einer Spritzgießmaschine mit einem lösbar an der Maschine befestigten Plastifizierzylinder und einer aus mindestens zwei Kupplungsteilen bestehenden Kupplungseinrichtung zur formschlüssigen Radial- und Axialverriegelung zwischen einer im Plastifizierzylinder drehbar und axial verschiebbar gelagerten Förderschnecke und einer Antriebswelle, die mit einem Rotationsmotor für die Drehbewegung und einer Kolben-Zylinder-Einheit für die Axialbewegung der Förderschnecke verbunden ist. Dabei weist das eine Kupplungsteil der Kupplungseinrichtung an seinem Umfang in axialer Richtung verlaufende Nuten auf, in die mindestens ein Verriegelungskörper sowie Mitnehmer des anderen Kupplungsteils gemeinsam einführbar sind. Der oder die Verriegelungskörper sind nach dem Einführen in eine Stellung überführbar, in der sie eine Sperrfläche des Kupplungsteils zum Zwecke der axialen Verriegelung hintergreifen.

Aus der DE 35 28 154 C1 ist eine Lösung bekannt mit einer Kupplungseinrichtung an einer Kunststoff-Spritzgießmaschine zum Kuppeln eines beim Spritzzyklus periodisch bewegten Kupplungsteiles einer automatisch auswechselbaren und quer zur Spritzachse abtransportierbaren Arbeitseinheit mit seiner in der Spritzachse angeordneten hydraulischen Antriebseinrichtung in Einbaustellung der Arbeitseinheit. Die Kupplungseinrichtung weist diametral zur Spritzachse angeordneten Schieber auf, die zum axialen Kuppeln mittels Federn in eine Ringnut des einen Kupplungsteiles einsteuerbar und in einem Schiebegehäuse radial verschiebbar geführt sind, das an dem anderen Kupplungsteil befestigt ist. Ein radial verschiebbar geführter Spreizkeil, ist zum Heraussteuern der Schieber aus der Ringnut mittels einer radial angeordneten Kolben-Zylinder-Einheit als Radialzylinder geringfügig in eine lineare Schieberfuge zwischen die Schieber eintreibbar. Dabei sind der Kupplungseinrichtung mit Axialverriegelung zum Verbinden einer im Plastifizierzylinder rotierbaren und axial verschiebbaren Förderschnecke als Arbeitseinheit mit einer radial und axial antreibenden Spindel der Antriebseinrichtung eine formschlüssige, axial ausrückbare Radialkupplung sowie eine Orientierungseinrichtung zugeordnet. Die gemeinsame Rotationsbewegung der Schieber der Axialverriegelung und der Radialkupplung ist etwa bei einer Soll-Winkelstellung der Schieberfuge beendbar, in der die Soll-Winkelstellung der Schieberfuge parallel zur Arbeitsrichtung des Radialzylinders verläuft.

Darüber hinaus sind bei einigen Systemen erhebliche Kraft- / Drehmomenteinwirkungen erforderlich, um die Kopplung bzw. Entkopplung der Förderschnecke zu erreichen, die zu erhöhtem Bedienaufwand oder im Extremfall zu Schäden an anderen Maschinenelementen führen, die für diese Belastungen nicht ausgelegt sind. Diese hohen Drehmomente, z.B. bei festsitzender Mutter, sind jedoch oft wegen des begrenzten umgebenden Raums und dem damit verbundenen eingeschränkten Bewegungsradius des Werkzeugs nicht übertragbar.

Die DE 10 2020 100 444 A1 beschreibt ein Plastifizieraggregat für eine Formgebungsmaschine mit einem Kupplungselement zum lösbaren Verbinden einer Plastifizierschnecke mit einer Antriebswelle, wobei die Plastifizierschnecke mittels wenigstens einer Welle-Nabe-Verbindung durch die Antriebswelle in eine Rotationbewegung um eine Mittelachse der Plastifizierschnecke versetzbar ist und wobei die Plastifizierschnecke durch das Kupplungselement gegen axiale Bewegungen im Wesentlichen parallel zur Mittelachse der Plastifizierschnecke lösbar sicherbar oder lösbar gesichert ist. Dabei weist das Kupplungselement wenigstens drei Riegelelemente auf, die zur lösbar axialen Befestigung der Plastifizierschnecke in radialer Richtung verschiebbar sind.

In der DE 42 23 489 A1 ist eine Kupplungsvorrichtung für eine Spritzgießmaschine zum lösbaren Verbinden einer axialverschiebbaren Schneckenwelle an eine Antriebswelle beschrieben, wobei die Schneckenwelle ein mit einer Außenverzahnung versehenes Einsteckende aufweist, das mit einem an einer Ringschulter gebildeten Absatz mit größerem Durchmesser gegenüber einem Wellenschaft abgesetzt ist. Dabei ist die Schneckenwelle mit dem Einsteckende in eine eine korrespondierende Innenverzahnung aufweisende Kupplungsbüchse der Antriebswelle einsteckbar, an der stirnseitig zwei sichelförmige, radial zueinander verschwenkbare Sperrklinken gelagert sind, die das in die Kupplungsbüchse eingeführte Einsteckende an der Ringschulter der Schneckenwelle hintergreifen und stirnseitig anliegen.

Aus der DE 32 29 223 A1 ist eine Kupplungsvorrichtung bekannt, bei der ein Abtriebskolben einer Antriebseinrichtung mit einem Kupplungsgehäuse versehen ist, in dem ein in Kupplungseingriffsrichtung federbelasteter und druckmittelbeaufschlagbarer Kupplungskolben angeordnet und in Richtung Kupplungsausrückung geführt ist. Der Kupplungskolben ist über einen Stößel mit einem Spannkäfig verbunden. Aufgrund der Federbelastung des Kupplungskolbens ist der Spannkäfig, der in radialer Richtung zwischen dem Kupplungsgehäuse und einem Kopfteil einer Schneckenwelle angeordnet ist, derart verformt, dass es das Kupplungsgehäuse und die Schneckenwelle derart reibschlüssig verbindet, dass sowohl Axialkräfte als auch Drehmomente von der Antriebseinrichtung auf die Schnecke übertragen werden können. Durch Druckmittelbeaufschlagung des Kupplungskolbens entgegen der Federwirkung entspannt sich der Spannkäfig und der Kraftschluss wird gelöst, so dass eine Plastifiziereinheit entnommen werden kann. Die Kupplungseinrichtung eignet sich besonders zum vollautomatischen Austausch der Plastifiziereinheit.

Die DE 15 29 788 A1 beschreibt einen Getriebestock mit einer hohlen Abtriebswelle eines Getriebes, an deren linkes Ende axial frei beweglich ein Schneckenschaft zwecks Mitnahme mit Nut und Gleitfeder lösbar gekuppelt ist. Am rechten Ende der Abtriebswelle ist eine Vorrichtung zum Austreiben der Schnecke eines plastikverarbeitenden Extruders angeordnet. Unmittelbar mit dem einen Ende der hohlen Abtriebswelle des Getriebes ist mittels Bajonettverschluss, bestehend aus Haltestiften und Führungsschlitzen, eine Zylinderbüchse bzw. ein Verbindungselement einer spannfutterähnlichen Einrichtung verriegelt. Ein die spannfutterähnliche Einrichtung abschließender Deckel ist mittels Schrauben mit dem Verbindungselement fest verbunden. Ein abgesetzter Umfang des Deckels dient als zur Abtriebswelle konzentrische Gleitbahn für die spannfutterähnliche Einrichtung. Ein stehengebliebener Rand des Deckels bildet zusammen mit zwei Vorsprüngen des Verbindungselementes mit kreisabschnittartigem Querschnitt die beiderseits axiale Führung für die drehbare, spannfutterähnliche Einrichtung. Ferner ist im Umfang des Deckels eine Einkerbung vorgesehen, in welche ein unter dem Druck einer Blattfeder stehender Raststift bei geöffneter Stellung von Gewindebacken einrastet, die sich durch Drehen der spannfutterähnlichen Einrichtung sehr leicht und rasch um eine Spindel schließen bzw. von ihr lösen lassen.

In der DE 20 35 788 A1 ist eine Schnellkupplung für Gelenkwellen beschrieben, insbesondere an Landmaschinen, mit einen Zapfwellenstumpf an der Zugmaschine und einem damit kuppelbaren trichterförmig erweiterten Endstück einer Gelenkwelle mit Einrichtungen zur Drehmomentübertragung im gekuppelten Zustand. Dabei sind federnde Sperrglieder in einer inneren Radial-Nut eines Endstückes der Gelenkwelle angeordnet und durchsetzen mit nach außen abgebogenen freien Enden Durchbrüche im Endstück, wobei Druckfedern für die Sperrglieder zwischen einer Innenwand des Endstückes und den halbkreisförmig ausgebildeten Sperrgliedern eingesetzt sind und die letzteren durch Federkraft in den Innenraum des Endstückes gedrückt werden. Dabei weist ein auf dem Zapfwellenstumpf befestigtes konisches Kupplungsteil eine Außen-Radial-Nut für den Eingriff der Sperrglieder auf.

Aus der DE 84 00 654 U1 ist eine trennbare Zapfwellenkupplungseinrichtung mit einem eine Außenverzahnung tragenden Kupplungszapfen sowie einer Kupplungsmuffe bekannt, in deren koaxiale Bohrung mit Innenverzahnung der Kupplungszapfen unter Herstellung einer drehfesten formschlüssigen Verbindung einführbar ist. Der Kupplungszapfen wirkt mit einer in der Kupplungsmuffe gelagerten, radial beweglichen, lösbaren Sperreinrichtung, die bei in die Kupplungsmuffe eingeschobenem Kupplungszapfen mit einem an dem Kupplungszapfen vorgesehenen Sperrglied zusammenwirkt, formschlüssig zusammen. Dadurch ist der Kupplungszapfen gegen axiales Verschieben in der Kupplungsmuffe gesichert. Die Sperreinrichtung ist von wenigstens einem an seinem Ende einen radial nach innen weisenden Haken tragenden Hebel gebildet, der auf einer zur Längsachse der Kupplungsmuffe rechtwinklig verlaufenden Achse schwenkbar gelagert ist, die in der Kupplungsmuffe sitzt. Dabei ist das Sperrglied von einem auf dem Kupplungszapfen befestigten Fortsatz gebildet, der im eingekuppelten Zustand von dem Haken hintergriffen ist und an einem Anschlag der Kupplungsmuffe anliegt.

Die JP S60157214 U beschreibt die Verbindung einer Schnecke einer Spritzgießvorrichtung mit einer Antriebswelle. Ein Teil des hinteren Endes der Schnecke ist an einer Verbindungsvorrichtung der Antriebswelle angebracht, wobei eine Anzahl von Verbindungsteilen, die durch die Verbindungsvorrichtung hindurchgehen, mit einer ringförmigen Nut des hinteren Endes der Schnecke, mittels einem Betätigungsring der Verbindungsteile, um die Außenseite des Verbindungselements in Eingriff gebracht ist. Darüber hinaus besteht bei der Verbindungsvorrichtung, die die Antriebswelle und die Schnecke einstückig verbindet, das Verbindungselement aus einem am oberen Teil des Elements vorgesehenen Anschlussstück und einem plattenförmigen Brückenelement, das am unteren Ende des Elements befestigt ist. Eine gleiche Anzahl von Nockennuten wie das Verbindungselement wird im Betätigungsring aufgenommen und ein Passelement wird in die Nockennut eingepasst, um das Verbindungselement so mit dem Betätigungsring zu verbinden, dass es in radialer Richtung beweglich ist. Dabei sind das Verbindungselement und die Schnecke über das Brückenelement miteinander verbunden, das frei lösbar positioniert ist.

Das Dokument JP S503572 Y1 offenbart Teile einer Einspritzvorrichtung, in der eine Einspritzschnecke von einer Antriebswelle gedreht wird und eine Keilwelle am hinteren Ende eines Schneckenschafts in ein Keilloch der Antriebswelle eingepasst ist. Um die Schnecke mit der Antriebswelle in axialer Richtung zu arretieren, ist in einem vor der Keilwelle gelegenen Teil des Schneckenschafts eine V-förmige Haltenut vorgesehen, die den Schneckenschaft vollständig umgibt und mit der eine Spitze eines Haltestifts in Eingriff bringbar ist, der Teil eines Halterings ist, der von einem Druckring umfasst wird, die beide an einem vorderen Umfang der Antriebswelle angeordnet sind und das Keilloch umgeben. Der Haltestift arbeitet mit einer ersten Feder zusammen, die beide in einer Durchbrechung des Halterings angeordnet sind, wobei der Haltestift in einem unbelasteten Zustand von der ersten Feder radial nach außen bewegt wird. An einem äußeren Umfang des Halterings ist ein Begrenzungsstift angeordnet und in dem äußeren Umfang ist in einer Aussparung eine zweite Feder angeordnet, die eine Kugel radial nach außen bewegt. Bei der Montage der Schnecke wird zunächst, bevor die Keilwelle in das Keilloch eingepasst werden kann, durch Drehen des Druckrings in eine erste Richtung eine halbkreisförmige Aussparung, die an der Innenfläche des Druckrings vorgesehen ist, in eine Überdeckungsposition mit dem Haltestift gedreht, wodurch der Haltestift von der ersten Feder radial nach außen bewegt wird und das Spitzenende des Haltestifts so weit zurückgezogen wird, dass die Keilwelle eingeführt werden kann. In diesem Zustand, wenn die Keilwelle in das Keilwellenloch eingeschoben wird, bis sie mit dem Ende des Keilwellenlochs in Berührung steht, kommt die im Schneckenschaft vorgesehene V-förmige Haltenut in eine Überdeckungsposition mit dem Haltestift. Wenn dann der Druckring in eine entgegengesetzte Richtung gedreht wird, bis der Begrenzungsstift auf einen Endteil einer Eingriffsnut im Druckring trifft, bei der die Positionierungskugel mittels der zweiten Feder in eine Nut des Druckrings geschoben wird und darin verrastet, wird der Haltestift durch den Druckring in die V-förmige Haltenut des Schneckenschafts vorgeschoben, so dass die Schnecke in dieser Position axial arretiert ist. Die Entnahme der Keilwelle aus dem Keilloch geschieht durch erneutes Drehen des Druckrings in die erste Richtung, wodurch der Haltestift wieder radial nach außen aus der V-förmigen Haltenut bewegt wird. Zur Erhöhung der Arretierungssicherheit sind drei gleichmäßig um den Umfang des Schneckenschafts verteilte Haltestifte in entsprechenden Durchbrechungen des Halterings vorgesehen.

Allen oben genannten Kupplungsvorrichtungen gemeinsam ist, dass sie zum Lösen der Verbindung ein Werkzeug benötigen, mit dem die Kupplungsvorrichtung von einem arretierten in einen nicht-arretierten Zustand gebracht werden kann. Dies führt in der Praxis, durch den für das Werkzeug nur begrenzt zur Verfügung stehenden Raum, sehr häufig zu Beschädigungen der Einspritzvorrichtungen.

Der Erfindung liegt daher die Aufgabe zugrunde, eine Kupplungsvorrichtung anzugeben, die werkzeuglos auch unter ungünstigen Umgebungsbedingungen intuitiv bedienbar sowie leicht verriegel- und entriegelbar ist, keine negativen Effekte hinsichtlich dem Mitdrehen von Antriebswellen aufweist und eine Beschädigung anderer Elemente vermeidet.

Dies wird mit einem Verfahren gemäß den Merkmalen des Anspruchs 1 gelöst. Dabei wird von einer Kupplungsvorrichtung für eine Förderschnecke und einen diese antreibenden Antrieb einer Maschine zur Verarbeitung von Kunststoffen und anderer plastifizierbarer Massen, zum formschlüssigen Kuppeln einer Förderschneckenwelle mit einer Antriebswelle ausgegangen. Im gekuppelten Zustand ist zum Verriegeln der Förderschneckenwelle mit der Antriebswelle zumindest ein Teil mindestens eines beweglichen federbelasteten Halteelements der Kupplungsvorrichtung in mindestens eine Ausnehmung der Förderschneckenwelle und / oder gegen mindestens eine Erhebung der Förderschneckenwelle radial in Richtung zu einer axialen Achse einsteuerbar, die sich durch die Förderschneckenwelle, die Kupplungsvorrichtung und die Antriebswelle erstreckt. Dabei ist ein werkzeuglos von Hand bedienbarer und um einen Körper der Kupplungsvorrichtung sowie um die Achse angeordneter Ring entlang eines Umfangs des Rings verdrehbar. Dies wird auch mit einer kunststoffverarbeitenden Maschine mit einer entsprechenden Kupplungsvorrichtung für eine Förderschnecke und einen diese antreibenden Antrieb gemäß Anspruch 12 gelöst.

Vorteilhaft kann eine derartige Kupplungsvorrichtung leicht, auch manuell, bedient werden. Durch den Ring können die Lös- oder Verriegelungskräfte gut auf den gesamten Umfang der Kupplungsvorrichtung übertragen werden, wobei gleichzeitig die baulichen Voraussetzungen dafür geschaffen werden, dass eine Bedienung in nahezu jeder Winkelposition möglich ist. Ein Ansteuern einer bestimmten Winkelposition kann entfallen. Da ein Zugriff an nahezu jeder Stelle möglich ist, wird auch die Zugänglichkeit bei der Bedienung erleichtert.

Vorteilhafte Weiterbildungen sind Gegenstand der abhängigen Patentansprüche.

In einer ersten bevorzugten die Einbaumöglichkeit der Kupplungsvorrichtung verbessernden Ausführungsform der Kupplungsvorrichtung ist das zumindest eine Teil des mindestens einen Halteelements von mindestens einer Feder in einem nichtverriegelten ausgesteuerten Zustand weg von der Achse oder in einem verriegelten eingesteuerten Zustand zur mindestens einen Ausnehmung und / oder Erhebung gehalten.

In einer weiteren bevorzugten die Einbaumöglichkeit der Kupplungsvorrichtung verbessernden Ausführungsform der Kupplungsvorrichtung ist das zumindest eine Teil des mindestens einen Halteelements vorteilhaft in radialer Richtung längs oder quer zur Achse schwenkbar. Je nach Ausführungsform lässt sich das Halteelement dadurch leicht und zuverlässig in seine Verriegelungsstellung einsteuern.

In einer zusätzlichen bevorzugten die Einbaumöglichkeit der Kupplungsvorrichtung verbessernden Ausführungsform der Kupplungsvorrichtung ist das zumindest eine Teil des mindestens einen Halteelements in radialer Richtung geradlinig zur Achse bewegbar.

In einer bevorzugten die Einbaumöglichkeit der Kupplungsvorrichtung verbessernden Ausführungsform der Kupplungsvorrichtung weist das Haltelement zumindest teilweise eine klauenförmige, kugelförmige, bolzenförmige oder stiftförmige Gestalt auf. Dies gestattet eine sichere Kupplung der Förderschneckenwelle an die Antriebswelle.

In einer weiteren bevorzugten die Sicherheit der Kupplungsvorrichtung erhöhenden Ausführungsform der Kupplungsvorrichtung ist die mindestens eine Ausnehmung der Förderschneckenwelle eine Abflachung in einem Teil des Umfangs der Förderschneckenwelle mit axialer Erstreckung oder eine Vertiefung darin und / oder die mindestens eine Erhebung erstreckt sich entweder nur teilweise oder vollständig über den Umfang der Förderschneckenwelle.

In einer anderen bevorzugten die Sicherheit der Kupplungsvorrichtung erhöhenden Ausführungsform der Kupplungsvorrichtung nimmt ein innerer Radius des Rings in mehreren gleichgroßen Abschnitten des Umfangs stetig in einer vorbestimmten Richtung entlang des Umfangs von einem minimalen zu einem maximalen Wert zu, wobei mehrere Ausnehmungen in der Förderschneckenwelle und / oder mehrere Erhebungen der Förderschneckenwelle diametral oder gleichverteilt angeordnet sind und wobei mehrere Halteelemente diametral oder gleichverteilt angeordnet sind. Dadurch ist eine Betätigung und eine Einsteuern der Halteelemente in die verriegelte Stellung in nahezu jeder Winkelposition problemlos möglich.

In einer bevorzugten vorteilhaft den Verschleiß der Kupplungsvorrichtung verringernden Ausführungsform der Kupplungsvorrichtung ist die Kupplungsvorrichtung in axialer Richtung spielfrei.

In einer anderen bevorzugten die Sicherheit der Kupplungsvorrichtung erhöhenden Ausführungsform der Kupplungsvorrichtung weist die Kupplungsvorrichtung mindestens ein Rastelement auf, welches das zumindest eine Teil des mindestens einen Halteelements im verriegelten Zustand hält.

In einer vorteilhaft die Sicherheit der Kupplungsvorrichtung erhöhenden Ausführungsform ist das mindestens eine Rastelement vorzugsweise mindestens eine radiale Ausnehmung in dem inneren Umfang des Rings, in welche das zumindest eine Teil des mindestens einen Halteelements im verriegelten Zustand eingerastet ist.

In einer nächsten bevorzugten den Komfort und die Sicherheit der Kupplungsvorrichtung erhöhenden Ausführungsform der Kupplungsvorrichtung ist das Verriegeln und / oder Entriegeln der Förderschneckenwelle mit der Antriebswelle durch ein haptisches Rastsignal, farbliche Kennzeichnungen oder Markierungen auf dem Ring oder einen Sensor signalisierbar.

In einer weiteren bevorzugten den Komfort und die Bedienfreundlichkeit der Kupplungsvorrichtung verbessernden Ausführungsform der Kupplungsvorrichtung weist der Ring eine ergonomische Form eines äußeren Umfangs auf, insbesondere parallel zur Achse verlaufende Vertiefungen.

In einer vorteilhaft die Sicherheit der Kupplungsvorrichtung erhöhenden Ausführungsform weist das mindestens eine Haltelement vorzugsweise eine parallel zur Achse verlaufende erste Auskragung auf, in die eine zweite parallel zur Achse verlaufende Auskragung des Rings eingreift, wobei ein äußerer Radius der zweiten Auskragung zumindest in einem Abschnitt des Ringumfangs stetig in der vorbestimmten Richtung entlang des Umfangs von einem minimalen zu einem maximalen Wert zunimmt.

Die in den Patentansprüchen einzeln aufgeführten Merkmale sind in technologisch sinnvoller Weise miteinander kombinierbar und können durch erläuternde Sachverhalte aus der Beschreibung und durch Details aus den Figuren ergänzt werden, wobei weitere Ausführungsvarianten der Erfindung aufgezeigt werden.

Die Erfindung wird nun anhand eines in den beigefügten Figuren dargestellten Ausführungsbeispiels näher erläutert. Es zeigen:

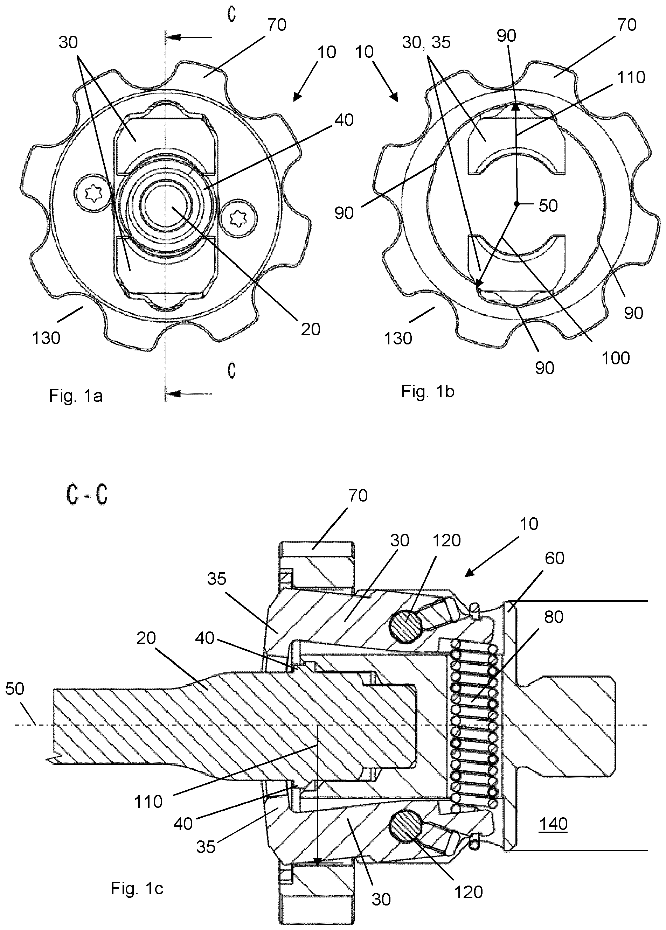

- Fig. 1a: eine förderschneckenwellenseitige axiale Draufsicht auf die Kupplungsvorrichtung in einer offenen Stellung der Kupplungsvorrichtung,
- Fig. 1: b eine förderschneckenwellenseitige axiale Draufsicht auf den Ring und Halteelemente der Kupplungsvorrichtung in der offenen Stellung,
- Fig. 1c: eine radiale Schnittansicht der Kupplungsvorrichtung der Ebene C-C der Fig. 1a in der offenen Stellung,
- Fig. 2a: eine förderschneckenwellenseitige axiale Draufsicht auf die Kupplungsvorrichtung in einer geschlossenen Stellung der Kupplungsvorrichtung,
- Fig. 2b: eine förderschneckenwellenseitige axiale Draufsicht auf den Ring und Halteelemente der Kupplungsvorrichtung in der geschlossenen Stellung,
- Fig. 2c: eine radiale Schnittansicht der Kupplungsvorrichtung der Ebene F-F der Fig. 2a in der geschlossenen Stellung.

### Beschreibung bevorzugter Ausführungsbeispiele

Bevor die Erfindung im Detail beschrieben wird, ist darauf hinzuweisen, dass sie nicht auf die jeweiligen Bauteile der Vorrichtung sowie die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht.

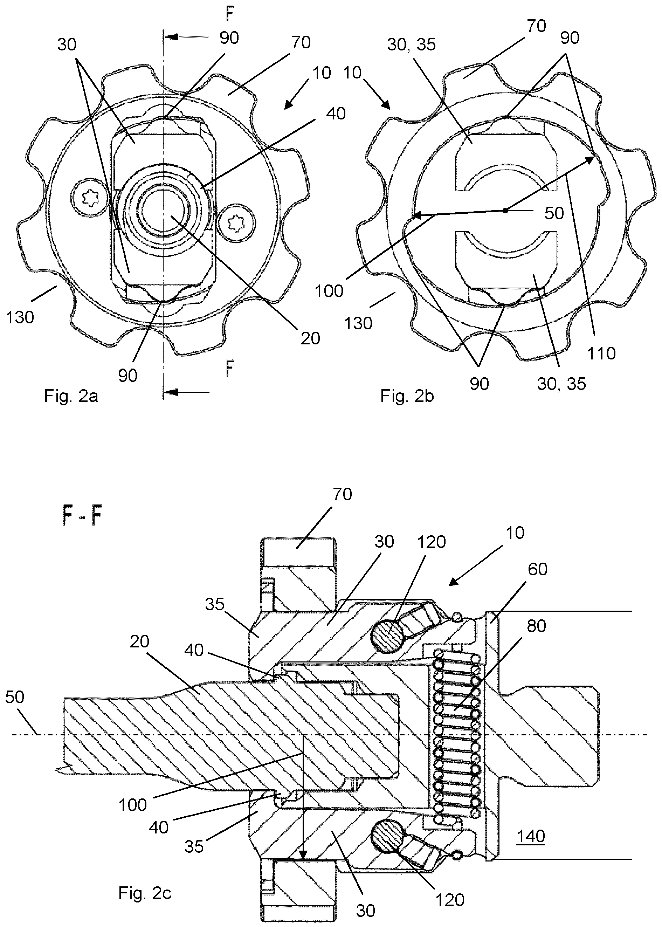

In den Fig. 1a - 1c ist dargestellt eine Förderschneckenwelle 20, die mit einer in Fig. 1c, 2c angedeuteten Antriebswelle 140 kuppelbar ist, wobei Halteelemente 30 der Kupplungsvorrichtung 10 in einem offenen und nichtverriegelten Zustand dargestellt sind. Die Antriebswelle 140 kann entweder einstückig mit einem Körper 60 der Kupplungsvorrichtung 10 sein oder mit diesem mittels einer aus dem Stand der Technik bekannten Verbindungvorrichtung verbunden sein. Im gekuppelten Zustand ist zum Verriegeln der Förderschneckenwelle 20 mit der Antriebswelle 140 jeweils ein Teil 35 der beweglichen federbelasteten Halteelemente 30 der Kupplungsvorrichtung 10 gegen eine Erhebung 40 der Förderschneckenwelle 20 radial in Richtung zu einer axialen Achse 50 einsteuerbar. Dabei erstreckt sich die Achse 50 durch die Förderschneckenwelle 20, die Kupplungsvorrichtung 10 und die Antriebswelle 140.

Ein werkzeuglos von Hand bedienbarer und um den Körper 60 der Kupplungsvorrichtung 10 sowie um die Achse 50 angeordneter Ring 70 ist entlang eines Umfangs des Rings 70 verdrehbar, wobei ein innerer Radius des Rings 70 zumindest in einem Abschnitt des Umfangs stetig in einer vorbestimmten Richtung entlang des Umfangs von einem minimalen zu einem maximalen Wert zunimmt. Er weist somit auf einem inneren Umfang eine keilartige Form auf. Der Ring 70 ist jeweils über einem der der Förderschneckenwelle 20 zugeordneten Enden der Halteelemente 30 angeordnet und liegt mit seinem inneren Umfang vorzugsweise jederzeit an den Halteelementen 30 an, wobei zum Verriegeln oder Entriegeln der Förderschneckenwelle 20 mit der Antriebswelle 140 der Ring 70 in der vorbestimmten Richtung entlang des Umfangs verdrehbar und jeweils das Teil 35 jedes Halteelements 30 gegen eine Federkraft in radialer Richtung bewegbar ist.

Die Teile 35 der beiden Haltelemente 30 weisen jeweils eine klauenförmige Form auf (Fig. 1a - 1b, 2a - 2b), welche gegen die Erhebung 40 in Form eines umlaufenden Kragens der Förderschneckenwelle 20 im geschlossenen und verriegelten Zustand der Halteelemente 30 eingesteuert sind, so dass ein Herausgleiten der Förderschneckenwelle 20 aus der Kupplungsvorrichtung 10 in axialer Richtung sicher verhindert ist. In Fig. 2a - 2c sind die Haltelemente 30 in einem geschlossenen und verriegelten Zustand dargestellt.

Da das Drehmoment zum Verriegeln oder Entriegeln der Kupplungsvorrichtung 10 sehr gering ist, kann ein Benutzer jederzeit selbst unter schwierigen Einbaubedingungen der Kupplungsvorrichtung 10, unter denen die Kupplungsvorrichtung 10 nicht zu sehen ist oder nur wenig Raum für deren Bedienung vorhanden ist, diese leicht selbst verriegeln oder entriegeln. Auch kann der Ring 70 mittels einer automatischen Vorrichtung innerhalb der kunststoffverarbeitenden Maschine bedient werden.

Wie bereits erwähnt, sind die aufzuwendenden Bedienungskräfte sehr gering, so dass die Bedienung des Rings 70 dabei nur von Hand und ohne die Verwendung eines Werkzeugs erfolgen kann, was den Komfort und die Bedienfreundlichkeit der Kupplungsvorrichtung 10 verbessert.. Eine Bedienung ist aber auch mittels eines Werkzeugs möglich, z. B. wenn der Ort der Kupplungsvorrichtungsanordnung gut einzusehen ist und genügend Raum zur Bedienung vorhanden ist.

In einer vorteilhaften die Einbaumöglichkeit der Kupplungsvorrichtung 10 verbessernden Ausführungsform der Kupplungsvorrichtung 10 ist das zumindest eine Teil 35 des mindestens einen Halteelements 30 von mindestens einer Feder 80 entweder in einem nichtverriegelten ausgesteuerten Zustand weg von der Achse 50 oder in einem verriegelten eingesteuerten Zustand zur mindestens einen Ausnehmung und / oder Erhebung 40 gehalten. Die Feder 80 kann somit entweder als Zug- oder Druckfeder ausgeführt sein. Infolge dessen kann der Ring 70 entweder über dem der Förderschneckenwelle 20 oder der Antriebswelle zugeordneten Ende der Halteelemente 30 angeordnet sein. Ist die Feder 80 als Druckfeder ausgeführt, kann der Ring 70 auch über dem der Förderschneckenwelle 20 zugeordneten Ende der Halteelemente 30 angeordnet sein.

Das mindestens eine Haltelement 30 kann in einer vorteilhaft die Sicherheit der Kupplungsvorrichtung 10 erhöhenden Ausführungsform eine parallel zur Achse 50 verlaufende erste Auskragung aufweisen, in die eine zweite parallel zur Achse 50 verlaufende Auskragung des Rings 70 eingreift, wobei ein äußerer Radius der zweiten Auskragung zumindest in einem Abschnitt des Ringumfangs stetig in der vorbestimmten Richtung entlang des Umfangs von einem minimalen zu einem maximalen Wert zunimmt. Dadurch werden die Haltelemente 30 zum einen sicher im verriegelten Zustand gehalten und zum anderen im nichtverriegelten Zustand sicher entgegen der Federkraft von der Achse 50 wegbewegt.

In einer vorteilhaften die Einbaumöglichkeit der Kupplungsvorrichtung 10 verbessernden Ausführungsform ist das zumindest eine Teil 35 des mindestens einen Halteelements 30 in radialer Richtung längs oder zur Achse 50 schwenkbar. Dabei ist das mindestens eine Halteelement 30 hebelartig ausgeführt und schwenkt um eine Schwenkachse 120, die am Körper 60 angeordnet ist.

In einer bevorzugten die Einbaumöglichkeit der Kupplungsvorrichtung 10 verbessernden Ausführungsform ist das zumindest eine Teil 35 des mindestens einen Halteelements 30 in radialer Richtung geradlinig zur Achse 50 bewegbar.

In einer vorteilhaft die Einbaumöglichkeit der Kupplungsvorrichtung 10 verbessernden Ausführungsform weist das Haltelement 30 zumindest teilweise eine klauenförmige, kugelförmige, bolzenförmige oder stiftförmige Gestalt auf. Bei einer Anordnung des Halteelements 30 in radialer Richtung längs zur Achse 50 kann der Teil 35 des Haltelements 30 z. B. klauenförmig ausgeführt sein, wobei er bei einer Anordnung des Halteelements 30 in radialer Richtung quer zur Achse 50 oder bei einer Anordnung des Haltelements 30 in radialer Richtung geradlinig zur Achse 50 z. B. kugelförmig, bolzenförmig oder stiftförmig ausgeführt sein kann. Sämtliche Ausführungsformen haben den Vorteil, dass die Förderschneckenwelle zuverlässig an die Antriebswelle 140 angekoppelt ist.

In einer vorteilhaft die Sicherheit und Bedienung der Kupplungsvorrichtung 10 erhöhenden Ausführungsform ist die mindestens eine Ausnehmung der Förderschneckenwelle 20 eine Abflachung in einem Teil des Umfangs der Förderschneckenwelle 20 mit axialer Erstreckung oder eine Vertiefung darin und / oder die mindestens eine Erhebung 40 erstreckt sich entweder nur teilweise oder vollständig über den Umfang der Förderschneckenwelle 20.

In einer vorteilhaft die Sicherheit der Kupplungsvorrichtung 10 erhöhenden und die Bedienbarkeit erleichternden Ausführungsform nimmt ein innerer Radius des Rings in wenigstens zwei, vorzugsweise in mehreren gleichgroßen Abschnitten des Umfangs stetig in einer vorbestimmten Richtung entlang des Umfangs von einem minimalen 100 zu einem maximalen 110 Wert zu. Dabei sind wenigstens zwei, vorzugsweise mehrere Ausnehmungen in der Förderschneckenwelle 20 und / oder wenigstens zwei, vorzugsweise mehrere Erhebungen 40 der Förderschneckenwelle 20 diametral oder gleichverteilt angeordnet sind und wobei wenigstens zwei, vorzugsweise mehrere Halteelemente 30 diametral oder gleichverteilt angeordnet sind.

In einer vorteilhaft den Verschleiß der Kupplungsvorrichtung 10 verringernden Ausführungsform ist die Kupplungsvorrichtung 10 in axialer Richtung spielfrei.

In einer vorteilhaft die Sicherheit der Kupplungsvorrichtung 10 erhöhenden Ausführungsform der Kupplungsvorrichtung 10 weist die Kupplungsvorrichtung 10 mindestens ein Rastelement auf, welches das zumindest eine Teil des mindestens einen Halteelements 30 im verriegelten Zustand hält. Dabei ist vorzugsweise das mindestens eine Rastelement mindestens eine radiale Ausnehmung 90 in dem inneren Umfang des Rings 70, in welche das zumindest eine Teil 35 des mindestens einen Halteelements 30 im verriegelten Zustand eingerastet ist.

In einer vorteilhaft den Komfort und die Sicherheit der Kupplungsvorrichtung 10 erhöhenden Ausführungsform ist das Verriegeln und / oder Entriegeln der Förderschneckenwelle 20 mit der Antriebswelle 140 durch ein haptisches Rastsignal, farbliche Kennzeichnungen oder Markierungen auf dem Ring 70 oder einen Sensor signalisierbar.

In einer vorteilhaft den Komfort und die Bedienfreundlichkeit der Kupplungsvorrichtung 10 verbessernden Ausführungsform weist der Ring 70 eine ergonomische Form eines äußeren Umfangs auf, insbesondere parallel zur Achse 50 verlaufende Vertiefungen 130. Der Ring 70 kann auf seinem äußeren Umfang auch eine gummierte Schicht und / oder eine Riffelung aufweisen, die ein Abrutschen bei dessen Bedienung verhindert.

### Bezugszeichenliste

- 10: Kupplungsvorrichtung
- 20: Förderschneckenwelle
- 30: Halteelement
- 35: Teil des Halteelements
- 40: Erhebung der Förderschneckenwelle
- 50: axiale Achse
- 60: Körper der Kupplungsvorrichtung
- 70: Ring
- 80: Feder
- 90: radiale Ausnehmung in inneren Umfang des Rings
- 100: minimaler innerer Radius des Rings
- 110: maximaler innerer Radius des Rings
- 120: Schwenkachse des Halteelements
- 130: Vertiefungen im äußeren Umfang des Rings
- 140: Antriebswelle

## Patentansprüche

1. Kupplungsvorrichtung (10), eingerichtet für eine Kupplung einer Förderschnecke und einen diese antreibenden Antrieb einer Maschine zur Verarbeitung von Kunststoffen und anderer plastifizierbarer Massen, zum formschlüssigen Kuppeln einer Förderschneckenwelle (20) mit einer Antriebswelle (140), wobei im gekuppelten Zustand zum Verriegeln der Förderschneckenwelle (20) mit der Antriebswelle (140) zumindest ein Teil (35) mindestens eines beweglichen federbelasteten Halteelements (30) der Kupplungsvorrichtung (10) in mindestens eine Ausnehmung der Förderschneckenwelle (20) und / oder gegen mindestens eine Erhebung (40) der Förderschneckenwelle (20) radial in Richtung zu einer axialen Achse (50), die sich durch die Förderschneckenwelle (20), die Kupplungsvorrichtung (10) und die Antriebswelle (140) erstreckt, einsteuerbar ist,
wobei ein um einen Körper (60) der Kupplungsvorrichtung (10) sowie um die Achse (50) angeordneter Ring (70) entlang eines Umfangs des Rings (70) verdrehbar ist, wobei ein innerer Radius des Rings (70) zumindest in einem Abschnitt des Umfangs stetig in einer vorbestimmten Richtung entlang des Umfangs von einem minimalen (100) zu einem maximalen (110) Wert zunimmt, wobei der Ring (70) zumindest teilweise über dem mindestens einen Halteelement (30) angeordnet ist und mit einem inneren Umfang an dem Halteelement (30) anliegt und
wobei zum Verriegeln oder Entriegeln der Förderschneckenwelle (20) mit der Antriebswelle (140) der Ring (70) in der vorbestimmten Richtung entlang des Umfangs verdrehbar und zumindest der eine Teil (35) des mindestens einen Halteelements (30) gegen eine Federkraft in radialer Richtung bewegbar ist **dadurch gekennzeichnet,**
**dass** der Ring (70) werkzeuglos von Hand bedienbar ist.

2. Kupplungsvorrichtung (10) nach Anspruch 1, **dadurch gekennzeichnet, dass** das zumindest eine Teil (35) des mindestens einen Halteelements (30) von mindestens einer Feder (80) in einem nichtverriegelten ausgesteuerten Zustand weg von der Achse (50) oder in einem verriegelten eingesteuerten Zustand zur mindestens einen Ausnehmung und / oder Erhebung (40) gehalten ist.

3. Kupplungsvorrichtung (10) nach Anspruch 1 oder 2, **dadurch gekennzeichnet, dass** das zumindest eine Teil (35) des mindestens einen Halteelements (30) in radialer Richtung längs oder quer zur Achse (50) schwenkbar ist.

4. Kupplungsvorrichtung (10) nach Anspruch 1 oder 2, **dadurch gekennzeichnet, dass** das zumindest eine Teil (35) des mindestens einen Halteelements (30) in radialer Richtung geradlinig zur Achse (50) bewegbar ist.

5. Kupplungsvorrichtung (10) nach einem der vorhergehenden Ansprüche,
**dadurch gekennzeichnet, dass** das Haltelement (30) zumindest teilweise eine klauenförmige, kugelförmige, bolzenförmige oder stiftförmige Gestalt aufweist.

6. Kupplungsvorrichtung (10) nach einem der vorhergehenden Ansprüche,
**dadurch gekennzeichnet, dass** die mindestens eine Ausnehmung der Förderschneckenwelle (20) eine Abflachung in einem Teil des Umfangs der Förderschneckenwelle (20) mit axialer Erstreckung oder eine Vertiefung darin ist und / oder dass die mindestens eine Erhebung (40) sich entweder nur teilweise oder vollständig über den Umfang der Förderschneckenwelle (20) erstreckt.

7. Kupplungsvorrichtung (10) nach einem der vorhergehenden Ansprüche,
**dadurch gekennzeichnet, dass** ein innerer Radius des Rings (70) in mehreren gleichgroßen Abschnitten des Umfangs stetig in einer vorbestimmten Richtung entlang des Umfangs von einem minimalen (100) zu einem maximalen (110) Wert zunimmt, dass mehrere Ausnehmungen in der Förderschneckenwelle (20) und / oder mehrere Erhebungen (40) der Förderschneckenwelle (20) diametral oder gleichverteilt angeordnet sind und dass mehrere Halteelemente (30) diametral oder gleichverteilt angeordnet sind.

8. Kupplungsvorrichtung (10) nach einem der vorhergehenden Ansprüche,
**dadurch gekennzeichnet, dass** die Kupplungsvorrichtung (10) in axialer Richtung spielfrei ist.

9. Kupplungsvorrichtung (10) nach einem der vorhergehenden Ansprüche,
**dadurch gekennzeichnet, dass** die Kupplungsvorrichtung (10) mindestens ein Rastelement aufweist, welches das zumindest eine Teil (35) des mindestens einen Halteelements (70) im verriegelten Zustand hält.

10. Kupplungsvorrichtung (10) nach Anspruch 9, **dadurch gekennzeichnet, dass** das mindestens eine Rastelement mindestens eine radiale Ausnehmung (90) in dem inneren Umfang des Rings (70) ist, in welche das zumindest eine Teil (35) des mindestens einen Halteelements (30) im verriegelten Zustand eingerastet ist.

11. Kupplungsvorrichtung (10) nach einem der vorhergehenden Ansprüche,
**dadurch gekennzeichnet, dass** das Verriegeln und / oder Entriegeln der Förderschneckenwelle (20) mit der Antriebswelle (140) durch ein haptisches Rastsignal, farbliche Kennzeichnungen oder Markierungen auf dem Ring (70) oder einen Sensor signalisierbar ist.

12. Kunststoffverarbeitende Maschine mit einer Kupplungsvorrichtung (10) für eine Förderschnecke und einen diese antreibenden Antrieb nach einem der Ansprüche 1 bis 11.

## Claims

1. A coupling device (10), configured for a coupling of a screw conveyor and a drive, driving same, of a machine for processing plastics materials and other plastifiable materials, for the positive-locking coupling of a screw conveyor shaft (20) to a drive shaft (140), wherein, in the coupled state, for locking the screw conveyor shaft (20) to the drive shaft (140), at least one part (35) of at least one movable spring-loaded retaining element (30) of the coupling device (10) is insertable into at least one recess of the screw conveyor shaft (20) and/or against at least one projection (40) of the screw conveyor shaft (20) radially in the direction of an axial axis (50), which extends through the screw conveyor shaft (20), the coupling device (10) and the drive shaft (140),
wherein a ring (70) arranged around a body (60) of the coupling device (10) and around the axis (50) is rotatable along a circumference of the ring (70), wherein an inner radius of the ring (70) increases continuously in a predetermined direction along the circumference from a minimum (100) to a maximum (110) value at least in a portion of the circumference,
wherein the ring (70) is arranged at least partially over the at least one retaining element (30) and abuts with an inner circumference against the retaining element (30), and
wherein, for locking or unlocking the screw conveyor shaft (20) with the drive shaft (140), the ring (70) is rotatable in the predetermined direction along the circumference and at least the one part (35) of the at least one retaining element (30) is movable in the radial direction against a spring force,
**characterised**
**in that** the ring (70) can be operated by hand without tools.

2. A coupling device (10) in accordance with claim 1, **characterised in that** the at least one part (35) of the at least one retaining element (30) is held by at least one spring (80) in an unlocked, removed state away from the axis (50) or in a locked, inserted state towards the at least one recess and/or projection (40).

3. A coupling device (10) in accordance with claim 1 or 2, **characterised in that** the at least one part (35) of the at least one retaining element (30) is pivotable in the radial direction longitudinally or transversely to the axis (50).

4. A coupling device (10) in accordance with claim 1 or 2, **characterised in that** the at least one part (35) of the at least one retaining element (30) can be moved in a straight line relative to the axis (50) in the radial direction.

5. A coupling device (10) in accordance with one of the preceding claims, **characterised in that** the retaining element (30) has at least partially a claw-shaped, spherical, bolt-shaped or pin-shaped form.

6. A coupling device (10) in accordance with one of the preceding claims, **characterised in that** the at least one recess of the screw conveyor shaft (20) is a flattening in a part of the circumference of the screw conveyor shaft (20) with axial extent or an indentation therein, and/or **in that** the at least one projection (40) extends either only partially or completely over the circumference of the screw conveyor shaft (20).

7. A coupling device (10) in accordance with one of the preceding claims, **characterised in that** an inner radius of the ring (70) increases continuously in a predetermined direction along the circumference from a minimum (100) to a maximum (110) value in a plurality of equally sized portions of the circumference, **in that** a plurality of recesses in the screw conveyor shaft (20) and/or several projections (40) of the screw conveyor shaft (20) are arranged diametrically or equally distributed, and **in that** a plurality of retaining elements (30) are arranged diametrically or equally distributed.

8. A coupling device (10) in accordance with one of the preceding claims, **characterised in that** the coupling device (10) is free of play in the axial direction.

9. A coupling device (10) in accordance with one of the preceding claims, **characterised in that** the coupling device (10) has at least one latching element which holds the at least one part (35) of the at least one retaining element (70) in the locked state.

10. A coupling device (10) in accordance with claim 9, **characterised in that** the at least one latching element is at least one radial recess (90) in the inner circumference of the ring (70), into which the at least one part (35) of the at least one retaining element (30) is latched in the locked state.

11. A coupling device (10) in accordance with one of the preceding claims, **characterised in that** the locking and/or unlocking of the screw conveyor shaft (20) with the drive shaft (140) can be signalled by a haptic latching signal, coloured signs or markings on the ring (70) or a sensor.

12. A plastics processing machine comprising a coupling device (10) for a screw conveyor and a drive, driving same, in accordance with one of claims 1 to 11.

## Revendications

1. Dispositif de couplage (10), configuré pour un couplage d'une vis d'alimentation et pour un mécanisme d'entraînement pour entraîner cette vis, d'une machine pour la transformation de matières plastiques et d'autres masses plastifiables, pour un couplage par complémentarité de formes d'un arbre de vis d'alimentation (20) avec un arbre d'entraînement (140), dans lequel à l'état couplé pour le verrouillage de l'arbre de la vis d'alimentation (20) avec l'arbre d'entraînement (140) au moins une partie (35) d'au moins un élément de maintien (30) déplaçable équipé d'un ressort du dispositif de couplage (10) peut être inséré dans au moins un évidement de l'arbre de la vis d'alimentation (20) et/ou contre au moins une protubérance (40) de l'arbre de la vis d'alimentation (20) radialement en direction d'un axe axial (50), qui s'étend à travers l'arbre de la vis d'alimentation (20), le dispositif de couplage (10) et l'arbre d'entraînement (140),
un anneau disposé autour d'un corps (60) du dispositif de couplage (10) ainsi qu'autour de l'axe (50) le long du contour de l'anneau (70) pouvant être entraîné en rotation, un rayon interne de l'anneau (70) augmentant au moins dans une section du contour continuellement dans un sens prédéterminé le long du contour d'une valeur minimale (100) à une valeur maximale (110),
l'anneau (70) étant disposé au moins partiellement au-dessus du ou des élément(s) de maintien (30) et prolonge avec un contour interne l'élément de maintien (30) et
pour le verrouillage ou le déverrouillage de l'arbre de la vis d'alimentation (20) avec l'arbre d'entraînement (140), l'anneau (70) pouvant être entraîné en rotation dans le sens prédéterminé le long du contour et au moins une partie (35) du ou des élément(s) de maintien (30) étant déplaçable à l'encontre d'une force de ressort dans la direction radiale,
**caractérisé en ce que**
l'anneau (70) peut être actionné à la main sans outil.

2. Dispositif de couplage (10) selon la revendication 1, **caractérisé en ce que** la ou les partie(s) (35) du ou des éléments de maintien (30) est/sont maintenu(s) par au moins un ressort (80) dans un état non actionné non verrouillé loin de l'axe (50) ou dans un état actionné verrouillé dans au moins l'évidement et/ou contre la protubérance (40).

3. Dispositif de couplage (10) selon la revendication 1 ou 2, **caractérisé en ce que** la ou les partie(s) (35) du ou des élément(s) de maintien (30) peu(ven)t être pivoté(s) dans la direction radiale longitudinalement ou perpendiculairement à l'axe (50).

4. Dispositif de couplage (10) selon la revendication 1 ou 2, **caractérisé en ce que** la ou les partie(s) (35) du ou des éléments de maintien (30) peu(ven)t être déplacé(s) dans la direction radiale en alignement avec l'axe (50).

5. Dispositif de couplage (10) selon l'une des revendications précédentes, **caractérisé en ce que** l'élément de maintien (30) présente au moins partiellement une forme de pince, de boule, de goujon ou de tige.

6. Dispositif de couplage (10) selon l'une des revendications précédentes, **caractérisé en ce que** la ou les évidement(s) de l'arbre de la vis d'alimentation (20) est un tassement dans une partie du contour de l'arbre de la vis d'alimentation (20) avec une extension axiale ou un creux à l'intérieur, et/ou **en ce que** la ou les protubérance(s) (40) s'étendent soit seulement partiellement soit totalement autour du contour de l'arbre de la vis d'alimentation (20).

7. Dispositif de couplage (10) selon l'une des revendications précédentes, **caractérisé en ce qu'**un rayon interne de l'anneau (70) augmente dans plusieurs sections de même taille du contour continuellement dans un sens prédéterminé le long du contour d'une valeur minimale (100) à une valeur maximale (110), **en ce que** plusieurs évidements dans l'arbre de la vis d'alimentation (20) et/ou plusieurs protubérances (40) de l'arbre de la vis d'alimentation (20) sont disposés diamétralement ou répartis régulièrement et **en ce que** plusieurs éléments de maintien (30) sont disposés diamétralement ou répartis régulièrement.

8. Dispositif de couplage (10) selon l'une des revendications précédentes, **caractérisé en ce que** le dispositif de couplage (10) est dépourvu de jeu dans la direction axiale.

9. Dispositif de couplage (10) selon l'une des revendications précédentes, **caractérisé en ce que** le dispositif de couplage (10) présente au moins un élément d'arrêt qui arrête au moins une partie (35) du ou des élément(s) de maintien (70) à l'état verrouillé.

10. Dispositif de couplage (10) selon la revendication 9, **caractérisé en ce que** le ou les élément(s) d'arrêt est/sont au moins un évidement radial (90) dans le contour interne de l'anneau (70), dans le(s)quel(s) la ou les partie(s) (35) du ou des élément(s) de maintien (30) s'insère(nt).

11. Dispositif de couplage (10) selon l'une des revendications précédentes, **caractérisé en ce que** le verrouillage et/ou le déverrouillage de l'arbre de la vis d'alimentation (20) avec l'arbre d'entraînement (140) peut être indiqué par un signal d'arrêt en relief, des caractéristiques colorées ou des marquages sur l'anneau (70) ou par un détecteur.

12. Machine de transformation de matières plastiques avec un dispositif de couplage (10) pour une vis d'alimentation et un mécanisme d'entraînement pour celle-ci, selon l'une des revendications 1 à 11.
